# EUROPÄISCHE PATENTANMELDUNG

(11) **EP 1 600 854 A2**
(43) Veröffentlichungstag der Anmeldung: **30.11.2005**
(21) Anmeldenummer: 05104221.6
(22) Anmeldetag: 18.05.2005
(51) Int. Cl.: G06F 9/44, G06F 17/30

(54) **Verfahren zum Arbeiten mit Kontaktplan und Funktionsplan und hierzu geeigneter grafischer Editor**

(30) Priorität: 21.05.2004 DE 102004025113
(71) Anmelder: SIEMENS AKTIENGESELLSCHAFT, 80333 München (DE)
(72) Erfinder: Balassa, Béla, 8000, Székesfehérvár (HU); Megyeri, Gergely, 1025, Budapest (HU); Pfahlmann, Lothar, 91083, Baiersdorf (DE); Schaer, Stephan, 90455, Nürnberg (DE)

(57) **Zusammenfassung**

Beim Arbeiten mit den grafikorientierten Programmiersprachen Kontaktplan und Funktionsplan besteht die Notwendigkeit, mit verschiedenen Datenformaten zu arbeiten. Die Transformation der unterschiedlichen Datenformate ineinander ist aufwändig und fehleranfällig. Es wird vorgeschlagen, XML als zentrales Dateiformat vorzusehen, und FUP- und/oder KOP-Netzwerke als XML-Dateien abzulegen, ggf. ergänzt durch darin eingebettete spezielle FUP- bzw. KOP-Grafik- und Debuginformationen.

## Beschreibung

Die Erfindung betrifft ein Verfahren, bei dem mit den Programmiersprachen Funktionsplan (FUP) oder Kontaktplan (KOP) ein Netzwerk erstellt und als Programm abgelegt wird, und einen hierzu geeigneten grafischen Editor.

Mit den Programmiersprachen Kontaktplan und Funktionsplan können elektronische Schaltungen mit unterschiedlicher Komplexität, nachfolgend Netzwerke genannt, grafikorientiert programmiert und deren Funktionen getestet werden. Hierzu bedient sich der Programmierer eines grafischen Editors, mit dessen Hilfe das Ergebnis visualisiert werden kann. Nach dem Erstellen des Programms wird dieses abgespeichert. Nach dem Stand der Technik erfolgt eine Abspeicherung beispielsweise in Maschinencode, in einer textuellen Assemblersprache wie beispielsweise AWL, gegebenenfalls ergänzt mit Zusatzinformationen, oder in selbst definierten Formaten. Soll das Programm nachfolgend geändert werden ist eine Rücktransformation in den Quellcode erforderlich. Eine derartige Rücktransformation ist jedoch aufwändig und fehleranfällig.

Bei der Benutzung von FUP oder KOP müssen verschiedene Datenformate eingesetzt werden, und es besteht häufig die Notwendigkeit, ein erstes Datenformat in ein zweites Datenformat zu überführen bzw. zu transformieren. Auch diese Transformationen sind aufwändig und fehleranfällig.

Aufbauend auf diesem Stand der Technik liegt der Erfindung das technische Problem zu Grunde, ein Arbeiten mit den Programmiersprachen Funktionsplan und Kontaktplan zu ermöglichen, bei dem eine Rücktransformation des abgelegten Programms in den Quellcode vereinfacht und der diesbezügliche Aufwand gemindert wird. Weiterhin soll der Aufwand für die Transformationen der verschiedenen Datenformate ineinander reduziert werden.

Die Lösung dieses technischen Problems erfolgt durch die Merkmale der unabhängigen Ansprüche. Vorteilhafte Weiterbildungen werden durch die abhängigen Ansprüche wiedergegeben oder lassen sich aus der nachfolgenden Beschreibung sowie den Ausführungsbeispielen entnehmen.

Beim vorliegenden Verfahren wird mindestens ein Teil des erstellten Programms in einen XML-String übersetzt, und anschließend der XML-String in einem Speichermittel abgelegt. Ein grafischer Editor, mit welchen das erfindungsgemäße Verfahren durchgeführt werden kann, weist korrespondierend hierzu Programmteile bzw. Softwareabschnitte auf, mit denen mindestens ein Teil des erstellten Netzwerks in ein XML-String abgebildet wird.

XML (extensible markup language) ist eine bekannte Sprache zur Beschreibung von Dokumenten mit strukturierten Informationen. Da die Informationsstruktur einem logischen Prinzip unterliegt, verfolgt XML den Ansatz, die Informationsstruktur abstrakt zu beschreiben. Dieser Ansatz von XML wird im Rahmen der Erfindung nutzbar gemacht, um XML zur abstrakten Beschreibung von Programmen zu verwenden, die als KOP- oder FUP-Netzwerke darstellbar sind.

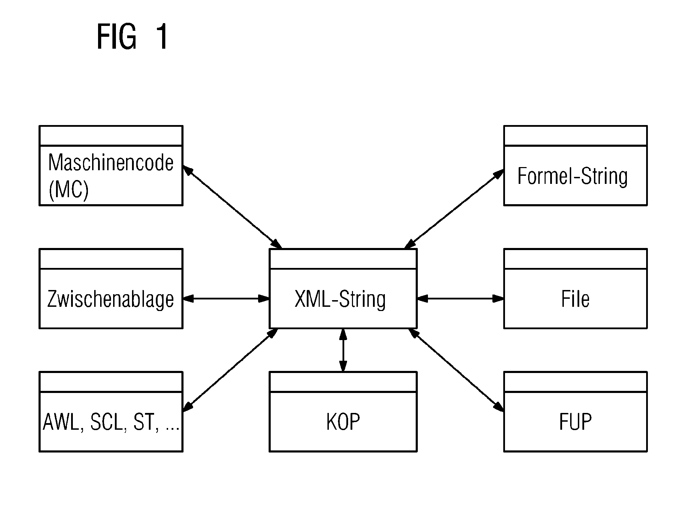

Durch das Ablegen des FUP- und/oder Netzwerkes in einen XML-String steht ein einheitliches Datenformat zur Verfügung, mit welchem der Aufwand für erforderliche Transformationen von einem ersten Datenformat in ein zweites Datenformat deutlich gemindert wird. Um dies zu erläutern sei auf Figur 1 verwiesen. In der Praxis besteht beim Arbeiten mit Funktionsplan oder Kontaktplan das Erfordernis, mit verschiedenen Formaten zu arbeiten. So muss einerseits mit dem jeweils grafisch erstellten Quellcode von FUP und KOP, andererseits mit Dateien in Maschinencode, Dateien in einer textuellen Assemblersprache wie AWL, mit der Zwischenablage, mit Text-Dateien sowie mit Formel-Strings umgegangen werden werden.

Nach dem Stand der Technik ist jeweils eine individuelle Transformation von einem ersten Format in ein zweites Format erforderlich. Bei n Datenformaten bedeutet dies allgemein einen Aufwand von n*(n-1) Transformationen, und im Beispielfall mit n=7 insgesamt 42 Transformationen. Wird als zentrale Datenstruktur hingegen ein XML-String verwendet, so muss der XML-String in insgesamt n=7 Formate transformiert, und entsprechend 7 mal rücktransformiert werden. Dies bedeutet einen deutlich geringeren Aufwand von n*2=14 Transformationen.

Es tritt hinzu, dass der Aufwand für eine Einzeltransformation von FUP oder KOP in einen XML-String oder umgekehrt recht gering ist, da sowohl die FUP- bzw. KOP-Programmstruktur, als auch der XML-String hierarchisch aufgebaut sind.

Bei der praktischen Realisierung des erfindungsgemäßen Verfahrens hat es sich als zweckmäßig erwiesen, dass die Übersetzung des erstellten Netzwerks in einen XML-String dadurch erfolgt, dass die Netzwerkstruktur auf eine baumartige XML-Struktur abgebildet wird. Die baumartige Struktur des zu erstellenden XML-Strings spiegelt in hohem Maße die Struktur eines FUP- oder KOP-Progamms wider, und mindert insofern den Aufwand für eine Transformation nochmals. Weiterhin vermindert dies die Gefahr von Fehlern bei der Umwandlung der Formate.

Beim Stand der Technik war beim Ablegen von KOP- und FUP-Programmen in Maschinencode oder Textdateien mit Assemblercode die Rückgewinnung von Grafiken besonders aufwändig. Gewisse Grafikinformationen, wie die Platzierung von KOP- oder FUP-Sprachobjekten oder Verschaltungslinien, gingen häufig beim Ablegen in Maschinen- oder Assemblercode verloren, und ebenso wertvolle Debuginformationen. Insofern wird bevorzugt, dass der XML-String auch KOP- und/oder FUP-Grafikinformationen sowie ggf. Debuginformationen enthält. Wird ein XML-String mit derart eingebetteten Zusatzinformationen in ein anderes Format transformiert, so werden diese nur bei der Transformation in ein KOP- bzw. FUP-Netzwerk berücksichtigt, bei einer Transformation in andere Formate jedoch überlesen. Im letztgenannten Fall können diese Zusatzinformationen jedoch erhalten und in das jeweils andere Format übernommen werden. Dies hat den Vorteil, dass dann das andere Format diese Zusatzinformationen noch besitzt, so dass sie bei einer eventuell später erfolgenden Transformation des anderen Formats in ein KOP- bzw. FUP-Netzwerk berücksichtigt werden können.

Beim Erstellen von Programmen ist es hilfreich, Daten auf einfache Weise zwischen verschiedenen Applikationen austauschen zu können. Da der XML-String im Rahmen der vorliegenden Erfindung ein zentrales Datenformat bzw. ein einheitliches Zwischen-Dateiformat darstellt, von dem aus eine Transformation in ein beliebiges anderes Format vorgenommen werden kann, ist der XML-String im besonderen Maße geeignet, in der Zwischenablage eines Computers abgelegt zu werden, um für Kopier- und Einfügeoperationen bzw. für Copy & Paste, sowie für Zieh- und Ablegeoperationen bzw. Drag & Drop für andere Applikationen zur Verfügung zu stehen. Dies erhöht den Benutzerkomfort und vermindert die Fehleranfälligkeit wenn es darum geht, ein erstes Format in ein zweites Format zu transformieren.

Das erfindungsgemäße Verfahren wird von einer Software in Gestalt eines grafischen Editors praktiziert. Der grafische Editor ist ausgebildet mittels Kontaktplan und/oder Funktionsplan erstellte Netzwerke darzustellen. Derartige Editoren sind allgemein bekannt und sind erfindungsgemäß dahingehend abgewandelt, dass der Editor Programmteile aufweist, um mindestens einen Teil des erstellten Netzwerks in einen XML-String abzubilden bzw. zu übersetzen. Der erstellte XML-String wird dann in oder auf einem Speichermittel abgelegt, beispielsweise dem Arbeitsspeicher eines Computers in Form eines RAM's, oder auf einer Festplatte, CD, DVD oder dergleichen.

Die Abbildung durch den Editor erfolgt zur Verminderung des Transformationsaufwandes am besten dadurch, dass der Editor eine baumartige XML-Struktur bereitstellt, auf welche die Netzwerkstruktur abbildbar ist. Umgekehrt kann der erfindungsgemäße Editor derartige XML-Strings auch wieder in Form von FUP- oder KOP-Netzwerken darstellen. Hierzu extrahiert er die XML-Beschreibung des darzustellenden Netzwerkes und stellt diesen einer von ihm erzeugten LUX-Instanz als Input zur Verfügung.

Der grafische Editor selbst kann hierbei auf einem Datenträger wie beispielsweise einer CD oder einer DVD, oder aber in einem Computerspeicher wie beispielsweise dem RAM des Computers abgelegt sein. Es besteht auch die Möglichkeit, den grafischen Editor mittels eines elektrischen Trägersignals über Netzwerke wie einem LAN, WAN oder dem Internet zu übertragen.

Nachfolgend soll das vorliegende Verfahren sowie der zugehörige Editor anhand von Ausführungsbeispielen in Verbindung mit den Zeichnungen näher erläutert werden. Hierbei zeigt:
- FIG 1:: zu verarbeitende Formate beim Arbeiten mit FUP/KOP,
- FIG 2a:: ein Beispiel für ein FUP-Netzwerk,
- FIG 2b:: die XML-Grundstruktur bei der Transformation von FUP/KOP zu XML,
- FIG 2c:: die XML-Grundstruktur bei der Transformation von FUP/KOP zu XML in Form eines Baumes,
- FIG 3a:: eine Funktionsbox in FUP,
- FIG 3b:: einen XML-String korrespondierend zur Funktionsbox von Fig. 3a,
- FIG 4a:: ein Beispiel für ein KOP-Netzwerk,
- FIG 4b:: einen XML-String korrespondierend Netzwerk der Figur 4a,
- FIG 4c:: ein FUP-Netzwerk, erzeugt mit dem XML-String von Figur 4b.

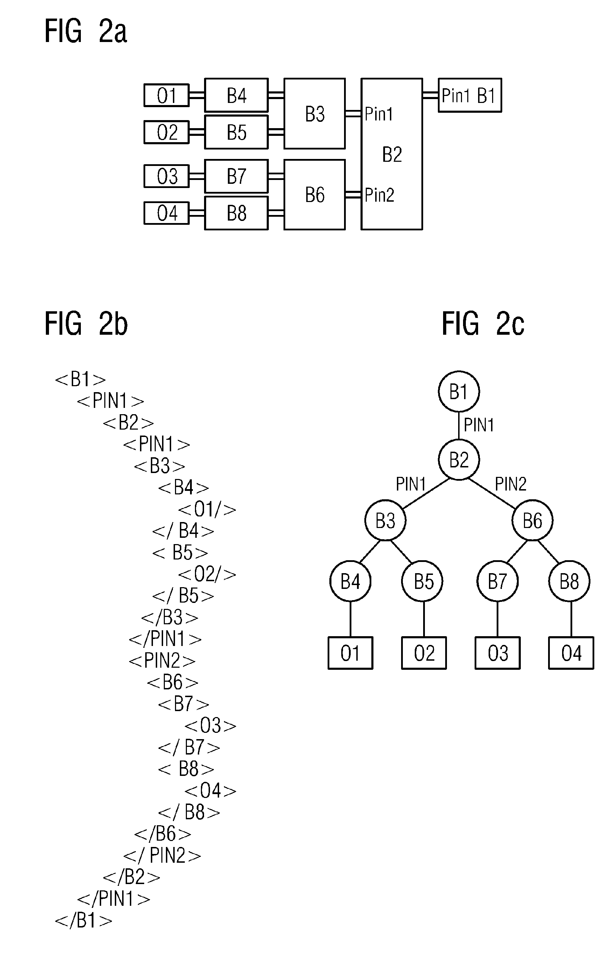

Figur 2a zeigt ein mit der Programmiersprache Funktionsplan erstelltes Netzwerk. Aus Gründen der Vereinfachung werden für die Bezeichnung der Tags keine richtigen Elementnamen verwendet, sondern Platzhalter. Auf zusätzliche Attribute und beschreibende Kindelemente wird ebenfalls verzichtet. B1 bis B8 sind insofern jeweils Operatoren, und 01 bis 04 Operanden. PIN1 bis PIN3 stehen für einen Pin. Die Operatoren haben, wie allgemein üblich, Kinderknoten welche entweder Operanden oder Operatoren sind. Über die PIN1, PIN2 und PIN3 wird jeweils ein Pin des Netzwerks spezifiziert, über welchen ein Operator mit einem weiteren Operator verknüpft ist.

Figur 2c zeigt einen Zwischenschritt bei der Transformation des Netzwerkes von Figur 2a in einen XML-String an, und veranschaulicht die baumartige Logikstruktur des FUP-Netzwerks von Figur 2a. Figur 2b wiederum zeigt das Grundgerüst des XML-Strings an, in den das FUP-Netzwerk von Figur 2a transformiert wird.

Beim Einlesen der Inhalte in den XML-String wird bezogen auf Figur 2a das äußerst rechte Element B1 zuerst eingelesen. Nach Einlesen von B2 orientiert sich die Reihenfolge des Einlesens an der Nummerierung der Pins von B2. Es wird also anschließend das Element B3 und seine Kindelemente eingelesen, und danach B6 nebst Kindelementen. Daraus ergibt sich beim Einlesen die Reihenfolge B1, B2, B3, B4, 01, B5, 02, B6, B7, 03, B8, 04.

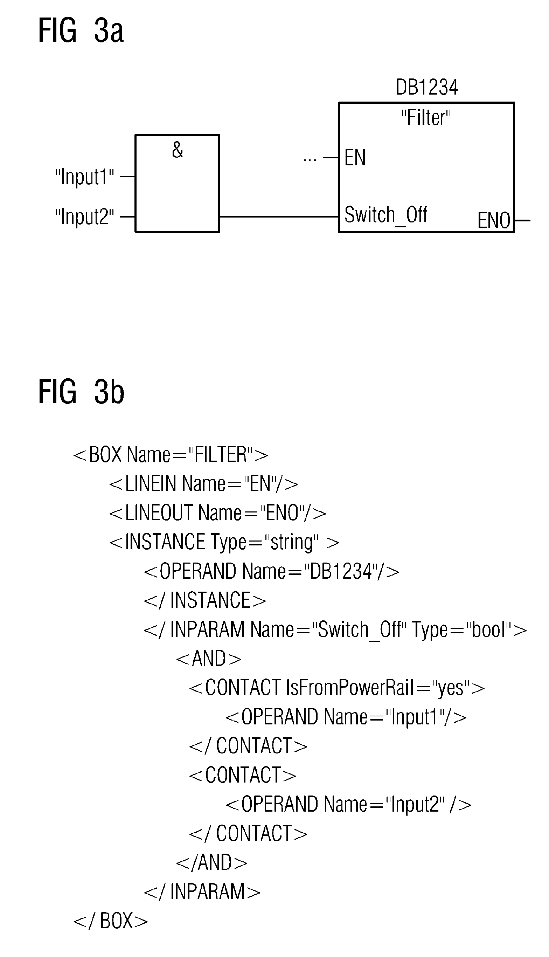

Figur 3a ist ein Beispiel für eine Funktionsbox, und steht beispielsweise für den Inhalt des Operators B1, welcher im vorliegenden Fall ein Filter mit der Bezeichnung "DB1234" sein soll, welcher von zwei Eingangssignalen "Input1" und "Input2" gespeist wird. Der Filter besitzt hierbei einen unbelegten Eingang "EN", den Ausgang "EN0", sowie einen Ausschalter "Switch_Off".

Figur 3b zeigt beispielhaft, wie die Funktionsbox in XML aussieht. Die Funktionsbox ist selbst ein Operator mit verschiedenen Sub-Elementen. Die Sub-Elemente sind entweder Operatoren oder Operanden. So sind vorliegend "Input1", "Input2" und "DB1234" Operanden die nicht vorverknüpft werden, d.h. selbst keine Sub-Elemente besitzen, und "AND" ist ein Sub-Element welches wiederum ein Operator ist. Sub-Elemente entsprechen in realen Netzwerken den Vorverschaltungen des Elements, und können zur näheren Beschreibung noch innerhalb eines Tags geklammert werden können. Durch eine Klammerung werden alle Sub-Elemente, welche an einem Eingangs-Pin (z.B. PIN1 von B3) hängen, logisch zusammengefasst. Bei Elementen, bei denen es auf die Reihenfolge der Eingangsparameter nicht ankommt (z.B. bei AND-Boxen), entfällt diese Klammerung

Um die unterschiedlichen Arten von Elemente zu unterscheiden werden unterschiedliche Tags für die Beschreibung der Operatoren verwendet, so beispielsweise ASSIGN, MIDLINE, CONTACT, AND, OR, NOT, XOR, BOXCONTACT, BOX.

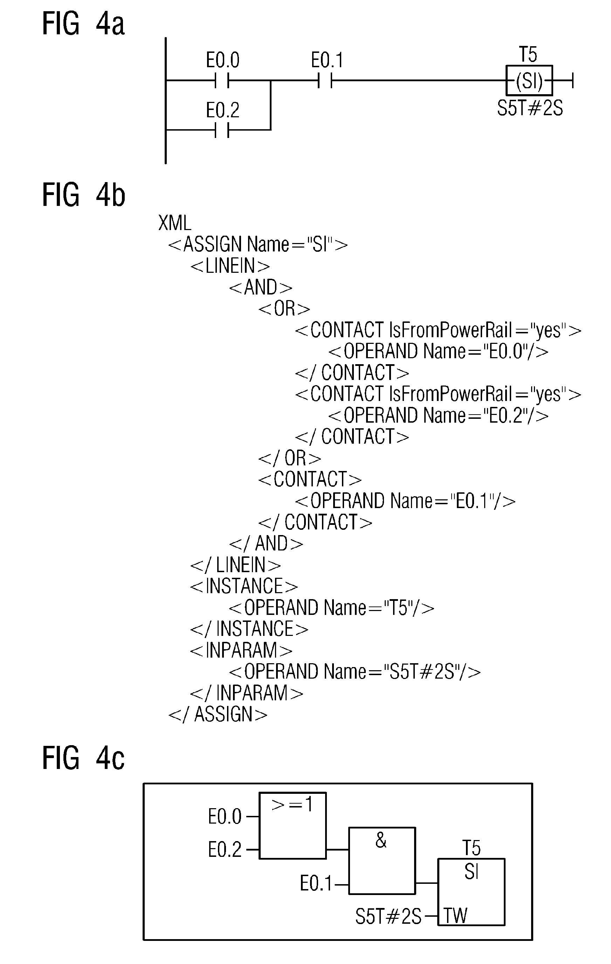

Figur 4a zeigt ein KOP-Netzwerk, und Fig. 4b die hierzu korrespondierende XML-Darstellung. Dieser XML-String besitzt auch eine spezielle KOP-Grafikinformation "IsFrom PowerRail="yes"" beim Operanden E0.0, welche nur bei einer Transformation des XML-Strings in ein KOP-Netzwerk berücksichtigt werden. Bei einer Transformation in Maschinencode oder in FUP ist diese Information irrelevant. Allerdings kann sie im Maschinencode bzw. FUP mit integriert werden, damit sie beispielsweise bei einer eventuellen Transformation von Maschinencode bzw. FUP nach KOP zur Verfügung steht.

Der XML-String gemäß Figur 4b kann nun als Input für eine Instanz des Lupeneditors zur Darstellung eines FUP-Netzwerkes gewählt werden, womit das Netzwerk als FUP-Netzwerk editiert werden kann. Figur 4c zeigt nun die zu Figur 4a entsprechende Darstellung in FUP.

## Patentansprüche

1. Verfahren, bei dem mit der Programmiersprache Funktionsplan (FUP) oder Kontaktplan (KOP) ein Netzwerk erstellt und als Programm abgelegt wird, **dadurch gekennzeichnet, dass** mindestens ein Teil des erstellten Programms in einen XML-String übersetzt wird, und anschließend der XML-String in einem Speichermittel abgelegt wird.

2. Verfahren nach Anspruch 1, **dadurch gekennzeichnet, dass** die Übersetzung des erstellten Netzwerks **dadurch** erfolgt, dass die Netzwerkstruktur auf eine baumartige XML-Struktur abgebildet wird.

3. Verfahren nach Anspruch 1 oder 2, **dadurch gekennzeichnet, dass** der XML-String KOP- und/oder FUP-Grafikinformationen enthält.

4. Verfahren nach einem der Ansprüche 1 bis 3, **dadurch gekennzeichnet, dass** der XML-String KOP- und/oder FUP-Debuginformationen enthält.

5. Verfahren nach einem der Ansprüche 1 bis 4, **dadurch gekennzeichnet, dass** der erzeugte XML-String in der Zwischenablage eines Computers abgelegt wird, und dort für Kopier- und Einfügeoperationen sowie für Zieh- und Ablegeoperationen zur Verfügung steht.

6. Verfahren nach einem der Ansprüche 1 bis 5, **dadurch gekennzeichnet, dass** der erzeugte XML-String in Maschinencode, intextueller Assemblersprache, in eine FUP- oder KOP-Programmdatei transformiert wird.

7. Grafischer Editor, ausgebildet zur Darstellung von mittels Kontaktplan (KOP) und/oder Funktionsplan (FUP) erstellten Netzwerken, **dadurch gekennzeichnet, dass** der Editor Programmteile aufweist, um mindestens einen Teil des erstellten Netzwerks in einen XML-String abzubilden.

8. Grafischer Editor nach Anspruch 7, **dadurch-gekennzeichnet**, dass die Programmteile eine baumartige XML-Struktur bereitstellen auf welche die Netzwerkstruktur abbildbar ist.

9. Computerprogramm nach Anspruch 7 oder 8, verkörpert auf einem Datenträger, abgelegt in einem Computerspeicher,oder übertragen mittels eines elektrischen Trägersignals.
